Europäisches Patentamt

European Patent Office

Office européen des brevets

(19)

(11) Veröffentlichungsnummer: **0 236 467**
**B1**

(12) **EUROPÄISCHE PATENTSCHRIFT**

(45) Veröffentlichungstag der Patentschrift: **02.01.91**

(51) Int. Cl.⁵: **H 02 K 29/08,** H 02 K 29/00

(21) Anmeldenummer: **86905785.1**

(22) Anmeldetag: **17.09.86**

(86) Internationale Anmeldenummer:
**PCT/EP86/00537**

(87) Internationale Veröffentlichungsnummer:
**WO 87/01879 26.03.87 Gazette 87/07**

(54) ELEKTROMOTOR.

(30) Priorität: **18.09.85 CH 4035/85**

(43) Veröffentlichungstag der Anmeldung:
**16.09.87 Patentblatt 87/38**

(45) Bekanntmachung des Hinweises auf die
Patenterteilung:
**02.01.91 Patentblatt 91/01**

(84) Benannte Vertragsstaaten:
**DE GB**

(56) Entgegenhaltungen:
**DE-A-2 632 013**
**DE-A-3 028 747**
**DE-A-3 340 292**
**US-A-4 115 715**

**Patents Abstracts of Japan,Band 7,Nr.52,(E-162)(1197),2.März 1983 &**
**JP,A,57202867,11.Dezember 1982**

**Patents Abstracts of Japan,Band 7,Nr.136,(E-181)(1281),14.Juni 1983 & JP,A,5851764,26.März 1983**

(73) Patentinhaber: **PAPST-MOTOREN GMBH & CO. KG**
**Karl-Maier-Strasse 1**
**D-7742 St. Georgen (DE)**

(72) Erfinder: **PAPST, Georg**
**Martin-Luther-Str. 11**
**D-7742 St. Georgen (DE)**

(74) Vertreter: **Hach, Hans Karl, Dr.**
**Tarunstrasse 23**
**D-6950 Mosbach-Waldstadt (DE)**

**Beschreibung**

Die Erfindung betrifft einen Gleichstrommotor für einen Ventilator, ausgestaltet als permanentmagnetischer Außenläufermotor, mit im wesentlichen zylindrischem Luftspalt für den Antriebsrotor, mit einer Flanschscheibe, die senkrecht zur Motorachse angeordnet ist und an deren Innenseite der Stator befestigt ist, und mit einer Steuerschaltung für den Motor, für die eine Schaltungsplatine vorgesehen ist, die planparallel zur Flanschscheibe angeordnet ist.

Bei einem aus der DE—A1 25 14 067 bekannten Gleichstrommotor dieser Art ist die Schaltungsplatine ringförmig ausgestaltet und koaxial zur Motorwelle zwischen dem Stator und der Flanschscheibe angeordnet.

Bei der Massenherstellung von Antriebsmotoren wird eine elektrische Schaltung benötigt, die in aller Regel in einer gesonderten Herstellungsstelle hergestellt wird. Diejenigen Hersteller von Gleichstrommotoren, die auf die Herstellung solcher Schaltungen nicht eingerichtet sind, beziehen diese mitsamt der Schaltungsplatine als Zulieferteil. Großabnehmer für Gleichstrommotoren dieser Art sind vielfach Hersteller von elektronischen Geräten. Solche Großabnehmer können die Schaltungen mit den Schaltungsplatinen unter Umständen günstig auch selbst herstellen. Das gilt insbesondere, wenn die fraglichen Gleichstrommotoren Teil eines Ventilators sind, denn solche Ventilatoren werden vielfach zur Kühlung in elektronischen Geräten eingesetzt.

Aus der japanischen A 57202657 ist eine außen aufgesetzte Schaltungsplatine bekannt, die mit Rastelementen fixiert ist und dadurch auch nachträglich einsetzbar ist. Diese Schaltungsplatine steht aber über die glatte Fläche, auf die sie außen aufgesetzt ist, über und unterliegt, dadurch bei der Montage und beim Betrieb des Gleichstrommotors unerwünschten mechanischen äußeren Einwirkungen, die zur Beschädigung oder zur Störung der empfindlichen Schaltungsplatine führen können.

Aufgabe der Erfindung ist es, einen Gleichstrommotor der Eingangs genannten Art so auszugestalten, daß die Schaltungsplatine mit der Schaltung einerseits bequem nachträglich in den, im übrigen fix und fertigen Gleichstrommotor einsetzbar ist, und andererseits vor unerwünschter mechanischer Einwirkung im fertigen Gleichstrommotor gestützt ist.

Diese Aufgabe wird dadurch gelöst, daß die Schaltungsplatine an der dem Stator abgekehrten Außenseite der Flanschscheibe dadurch angeordnet ist, daß an der Außenseite der Flanschscheibe eine Vertiefung vorgesehen ist, in die die Schaltungsplatine paßt.

Dabei ist vorzugsweise die Schaltungsplatine ringförmig—gegebenenfalls mit Einschnitten am äußeren Rand—und koaxial zur Motorachse angeordnet.

Die Erfindung gestattet es, Motorvorprodukte, die bis auf die entzusetzende Schaltungsplatine functionsfähig fertige Antriebsmotoren sind, vorzufertigen und dann nachträglich bei Bedarf mit einer Schaltungsplatine auszurüsten und dadurch fertigzustellen.

Es können Schaltungsplatinen eingesetzt werden, die mit unterschiedlichen Steuerschaltungen ausgerüstet sind, je nach der gewünschten Motorenfunktion. Dann braucht man für unterschiedliche Motorentypen nur eine einzige Motorvorprodukttype bereitzuhalten, was die Massenherstellung und auch die Lagerhaltung vereinfacht.

Die Schaltungsplatine kann eingeklebt, eingeklemmt, eingeschraubt oder anderweitig befestigt werden. Zweckmäßig ist es, sie entsprechend der zitierten JP—PS mit einer Rasterung zu halten, in die sie leicht einsetzbar ist. Eine dementsprechende Ausgestaltung der Erfindung ist Gegenstand des Anspruchs 2. Auf diese Weise ist die nachträgliche Montage der Schaltungsplatine weitgehend vorbereitet und erleichtert.

Der Anschluß des Stators an die Schaltungsplatine kann durch gelötete oder geschweißte elektrische Verbindungen erfolgen. Die nötigen Löt- und Schweißarbeiten erspart man sich, wenn die Verbindung durch Kontakte hergestellt wird, wie diese Gegenstand des Anspruchs 3 ist.

Es empfiehlt sich, die Schaltungsplatine an ihrer der Flanschscheibe abgekehrten Rückseite durch eine Isolierscheibe abzudecken. Die Isolierscheibe kann eine aufgeklebte Folie sein.

Die Schaltungsplatine findet sicheren Halt und auch Schutz vor äußeren mechanischen Einwirkungen, wenn an der Außenseite der Flanschscheibe eine Vertiefung vorgesehen ist, in die die Schaltungsplatine paßt. Die Passung kann dabei nur in einer ganz bestimmten Drehlage der Schaltungsplatine gegeben sein und stets die gleiche Einbausituation gewährleisten.

Es ist wünschenswert, daß die Schaltungsplatine nicht aus der Kontur der Flanschscheibe nach außen herausragt, also die axiale Länge des Elektromotors nicht vergrößert. Das kann man durch entsprechend flache Ausgestaltung der Schaltungsplatine und tiefe Ausgestaltung der Vertiefung erreichen.

Unter Umständen finden auftragende Schaltungselemente in der Steuerschaltung Anwendung. Diese werden vorzugsweise auf der der Flanschscheibe zugekehrten Vorderseite der Schaltungsplatine angeordnet und finden dann, wenn sie in der Vertiefung keinen Platz finden, in vorgesehenen Ausnehmungen und/oder Durchbrüchen der Flanschscheibe Platz.

Die Magnetfeldumschaltung im Unlauftakt eines Elektromotors erfolgt bei modernen Motoren der hier in Frage stehenden Art vorzugsweise durch berührungslose Abtastung der jeweiligen Drehstellung des Rotors. Ein dazu erforderliches Sensorelement muß für seine Funktion eine ganz bestimmte Stellung in der Nähe des rotors haben.

Die Erfindung ist bevorzugt anwendbar bei Motoren, die mit einem solchen Sensorelement ausgestattet sind, weil durch die Erfindung auf einfache Weise sichergestellt werden kann, daß das Sensor element bei eingesetzter Schaltungsplatine immer exakt die für seine Funktion vorgegebene Stellung einnimmt. Eine dementsprechende Ausgestaltung der Erfindung ist Gegenstand des Anspruchs 7.

In einem solchen Fall ist die Ausgestaltung als kollektorloser Gleichstrommotor mit permanentmagnetischem Außenläuferrotor bevorzugt.

In einem solchen Fall ist die Ausgestaltung als kollektorloser Gleichstrommotor mit permanentmagnetischem Außenläufermotor bevorzugt.

Das Sensorelement kann ein Hallgenerator sein. Vorzugsweise ist dieser Hallgenerator mit dem zugehörigen Verstärker zu einem einzigen, integrierten Schaltungselement vereinigt. Ein solcher Hallgenerator ragt bei eingesetzter Schaltungsplatine unter Aussparung eines Luftspaltes bis dicht an die Rotorpole.

Zweckmäßig ist die Schaltungsplatine in den im übrigen fix und fertig montierten Motorenrohling einsetzbar, derart, daß der Motorenrohling bei eingesetzter und angeschlossener Schaltungsplatine une gegebenenfalls aufgesetzter Isolierscheibe fertig und funktionsfähig ist. Auf diese Weise wird der Motor bis auf die Schaltungsplatine und deren Anschluß vorgefertigt. Die nachträgliche Fertigstellung durch Ausrüsten mit der Schaltungsplatine erfordert nur minimalen Aufwand.

Bevorzugt ist die Anwendung der Erfindung in Verbindung mit einem durch einen elektrischen Kleinmotor angetriebenen Ventilator, weil solche Ventilatoren in großen Mengen für die Kühlung elektronischer und elektrischer Geräte in diese eingebaut werden. Die Hersteller dieser elektrischen Geräte, die diese Ventilatoren als Zulieferteil von anderen Herstellungsspezialisten beziehen, sind gut eingerichtet, elektrische Schaltungsplatinen herzustellen und können die durch die Erfindung gegebene Nachrüstbarkeit mit der Schaltungsplatine besonders nutzen. Dabei wirkt sich auch der Umstand aus, daß diese Schaltungsplatine an die Schaltung des elektronischen Gerätes angeschlossen werden muß, so daß die Anschlußarbeiten für den Anschluß der Schaltungsplatine an den Motorenrohling in die bei der Geräteherstellung anfallenden Arbeiten passen.

Elektromotoren der hier in Frage stehenden Art werden in der Regel auf ihre Funktion geprüft. Eine solche Prüfung ist auch für die Motorenrohlige wünschenswert, wenn diese zur Nachrüstung mit der Schaltungsplatine ausgeliefert werden. Ein Herstellungsverfahren, das eine solche Prüfung der Motorenrohlinge auf einfache Weise ermöglicht, ist Gegenstand des Anspruchs 13.

Die Erfindung wird nun anhand der beigefügten Zeichnung näher erläutert.

In der Zeichnung zeigt:

Figur 1 einen Elektromotor im Querschnitt,

Figur 2 eine Schaltungsplatine, eingesetzt in eine Flanschscheibe, im Querschnitt,

Figur 3 den Ausschnitt III aus Figur 2,

Figur 4 den Ausschnitt IV aus Figur 1 für ein gegenüber Figur 1 abgeändertes Ausführungsbeispiel, und

Figur 5 einen Ventilator im Querschnitt.

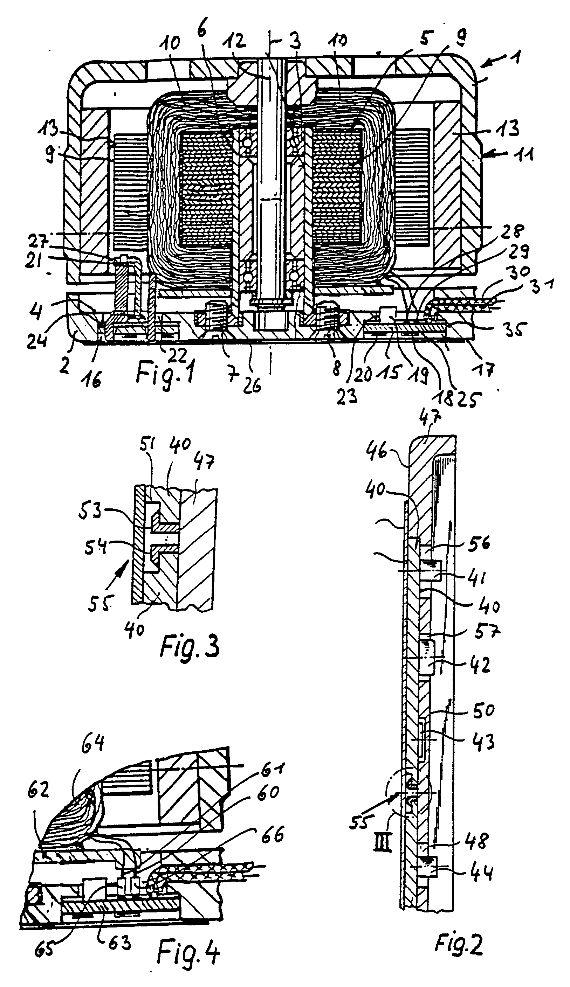

Der in Figur 1 allgemein mit 1 bezeichnete Elektromotor weist eine Flanschscheibe 2 auf, die sich senkrecht und im wesentlichen koaxial zur Motorachse 3 erstreckt. An der Innenseite 4 der Flanschscheibe ist der Stator 5 befestigt. Zu diesem Zweck ist das Lagerrohr 6 mit Schrauben 7, 8 an der Flanshscheibe 2 verschraubt. Das Lagerrohr 6 ist in das Blechpaket 9 eingepreßt. Mit 10 ist eine von zwei vorgesehenen Statorspulen bezeichnet.

Der Elektromotor 1 ist ein Außenläufermotor, dessen Außenläuferrotor mit 11 bezeichnet ist. Die Welle 12 des Außenläuferrotors 11 ist in dem Lagerrohr 6 drehbar gelagert. Der Elektromotor 1 ist ein kollektorloser Gleichstrommotor, dessen Außenläuferrotor 11 mit einem Permanentmagneten 14 ausgestattet ist. Mit 15 ist eine ringförmige Schaltungsplatine bezeichnet, die planparallel zur Flanschscheibe und koaxial zur Motorachse 3 in eine Vertiefung 16 an der Außenseite 17 der Flanschscheibe 2 eingepaßt ist. Diese Schaltungsplatine 15 trägt eines Steuerschaltung für den Motor, zu der neben anderen Schaltungselementen 18, 19, 20 ein Hallgenerator 21 gehört, der als Sensorelement die Drehstellung des Rotors 11 erkennt und zu diesem Zweck unter Aussparung eines Luftspaltes 27 bis dicht an die Rotorpole des Rotors 11 ragt. Der Hallgenerator 21 bindet ebenso wie das Schaltungselement 19 in der Vertiefung 16 kleinen ausreichenden Platz und deshalb ist in der Flanschscheibe 2 jeweils ein Durchbruch 22, 23 vorgesehen, durch den das betreffende Schaltungselement hindurchragt.

Die auftragenden Schaltungselemente sind auf der der Flanschscheibe zugekehrten Vorderseite 24 der Schaltungsplatine 15 angeordnet und die Schaltungsplatine ist so tief in die Vertiefung 16 eingelassen, daß sie mit keinem ihrer Teile über die durch die Rückseite 25 der Flanschscheibe gegebene Außenkontur hinausragt. Die Rückseite 25 der Flanschscheibe ist durch eine aufgeklebte Isolierscheibe 26, die sich mit Zugabe über die Schaltungsplatine erstreckt, abgedeckt.

Die Steuerschaltung ist durch Lötverbindungen 28, 29 elektrisch an die Statorspule 10 angeschlossen. Entsprechende Lötverbindungen sind auch für die andere, nicht dargestellte Statorspule vorgesehen.

Die Stromzufuhr erfolgt über die nach außen geführten Stromleitungen 30, 31, die an die Steuerschaltung der Schaltungsplatine führen.

Die Schaltungsplatine 15 kann in den im übrigen fertiggestellten Motorrohling mitsamt den Schaltungselementen 18, 19, 20, 21 nachträglich eingesetzt werden. Durch Randvorsprünge, zum Beispiel den Randvorsprung 35 an der Flanschscheibe und entsprechende Randausnehmungen an der Schaltungsplatine 15 ist sichergestellt, daß die Schaltungsplatine immer in der gleichen vorgegebenen Position eingesetzt wird, in der der Hallgenerator 21 die für seine Funktion vorgesehene Stellung dicht gegenüber Rotorpolen des rotors 11 einnimmt.

Zum Fertigstellen des Motorrohlings wird die Schaltungsplatine eingesetzt, über die Lötverbindungen 28, 29 elektrisch angeschlossen und durch die Isolierscheibe 26 abgedeckt.

Die Schaltungsplatine 15 wird durch Verkleben gehaltert, sie kann aber auch durch Verschrauben oder durch Rastelemente gehaltert werden, wie dies weiter unten für ein anderes Ausführungsbeispiel noch erläutert wird.

Die Schaltungsplatine 40 aus Figur 2 und 3 ist mit zur Steurschaltung gehörenden Schaltungselement 41, 42, 43, 44 bestückt. Diese Schaltungselement sind auftragend und finden in der Vertiefung 45 an der Rückseite 46 der Flanschscheibe 47 keinen Platz mehr. Deshalb sind für diese Schaltungselemente Durchbrüche 56, 57, 48 und Ausnehmungen 50 vorgesehen.

Die Schaltungsplatine 40 paßt nur in einer einzigen Drehstellung in die Vertiefung 45. Das ist gesichert durch mehrere Rastelement, die auf die Fläche der Schaltungsplatine verteilt sind. Eines dieser Rastelemente ist in Figur 2 und 3 sichtbar und mit 55 bezeichnet.

Das Rastelement 55 ist an der Rückseite 46 der Flanschscheibe 47 vorgesehen und wirkt mit einem entsprechenden Rastgegenelement 51 der Schaltungsplatine 40 bei eingesetzter Schaltungsplatine zusammen und bildet eine jeweils federbelastete, die Schaltungsplatine halternde Rast.

Das Rastelement 55 besteht aus zwei Rasthaken 53, 54, die gegeneinander verfedert sind. Das Rastgegenelement 51 ist eine abgestufte Aufnahmeöffnung in der Schaltungsplatine. Die Rasthaken 53, 54 können gegen die ihnen innewohnende Federkraft aus der Raststellung, die in Figur 3 gezeichnet ist, gegeneinander gebogen werden, so daß die Schaltungsplatine aufgesetzt und auch wieder abgenommen werden kann. Bei dem in Figur 4 nur teilweise dargestellten Ausführungsbeispiel sind zum Abschluß der Statorspule 64 stationär angeordnete Kontaktstifte 60, 61 vorgesehen, an die die Wicklungsenden der Spule angeschlossen sind. Die Kontaktstifte sind in einem verdickten Ende einer sich entlang der einen Stirnfläche der Spule 64 erstreckenden Abschlußplatte 62 aus Kunststoff gelagert. Diese Kontaktstifte 60, 61 passen bei eingesetzter Schaltungsplatine 63 in als Buchsen ausgebildete Gegenkontakte 65, 66, die an der Schaltungsplatine 63 befestigt und an die Steuerschaltung dieser Schaltungsplatine angeschlossen sind. Bei eingesetzter Schaltungsplatine finden die Kontaktstifte 60, 61 mit den Gegenkontakten 65, 66 elektrisch leitenden Kontakt. Entsprechende Kontaktverbindungen sich auch für die andere, nicht dargestellte Statorspule vorgesehen. Im übrigen ist dieses Ausführungsbeispiel genauso ausgebildet wie das in Figur 1 dargestellte.

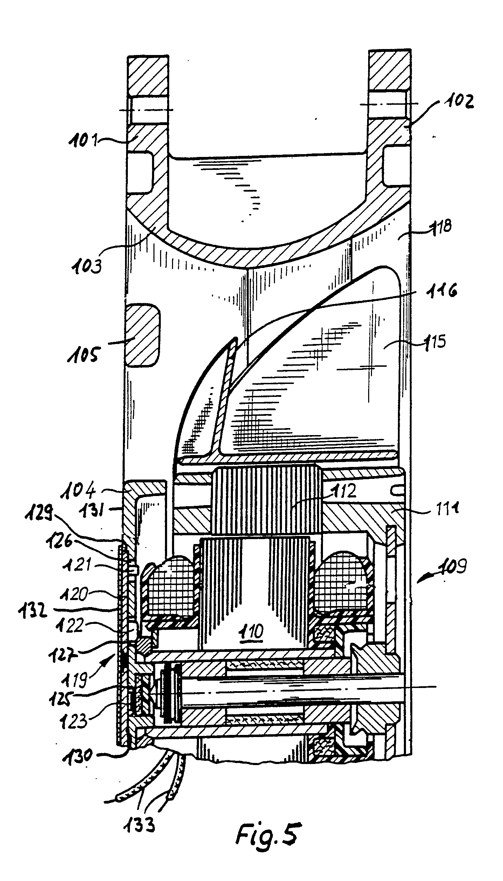

In Figur 5 sind mit 101 und 102 zwei quadratische gleichgroße Rechteckrahmen bezeichnet, die an den beiden Enden eines Rohrstückes 103 angeordnet sind und das Rohrstück eng umgeben. Am saugseitigen Ende des Rohrstückes ist koaxial zum Rohrstück eine Flanschscheibe 104 mit vier Speichen, von denen in der Zeichnung angeschnitten nur die eine Speiche 105 sichtbar ist, am Rohrstück 103 montiert. Die Flanschscheibe erstreckt sich mit en Speichen am einen Ende des Rohrstückes, leigt aber noch innerhalb des Rohrstückes. Die bis jetzt beschriebenen Teil bestehen aus Metall.

An der Flanschscheibe ist der Antriebsmotor 109 befestigt, der sich vollständig innerhalb des Rohrstückes koaxial zu diesem befindet. Der Stator ist mit 110 und der Rotor mit 111 bezeichnet. Der Rotor umgibt mit einem topfförmigen Rotoraußenteil 112 den Stator. Außen an diesem Rotoraußenteil 112 sind Ventilatorflügel 115, 116 angebracht, die sich in dem zwischen Rotoraußenteil 112 und Rohrstück 103 ausgesparten, ringförmigen Strömungskanal 118 erstrecken.

Zur Ansteuerung und Stromversorgung des Antriebsmotors dient eine elektrische Steuerschaltung 119, die auf einer Schaltungsplatine 120 montiert ist. Die auftragenden Schaltungselemente 121, 122, 123 sind sämtlichst an der der Flanschscheibe zugekehrten Vorderseite der Schaltungsplatine angeordnet. Für diese auftragenden Schaltungselemente sind in der Flanschscheibe Ausnehmungen vorgesehen, und zwar für das Schaltungselement 123 die Ausnehmung 125 und für die Schaltungselemente 121, 122 die Durchbrüche 126, 127, so daß diese Schaltungselemente Platz finden. Die Ausnehmungen sind insgesamt nur so groß, daß sie die erforderliche Stabilität der Flanschscheibe nicht beeinträchtigen. Die Schaltungsplatine ist in eine rückwärtige Vertiefung 129 der Flanschscheibe eingepaßt und schließt an ihrer Rückseite 130 bündig mit der Rückseite 131 der Flanschscheibe ab. Damit die Schaltungsplatine in der richtigen Winkelorientierung eingebaut wird, weist sie an ihrem Umfang eine nicht sichtbare Kerbe auf, der eine nicht sichtbare Nase des Flanschscheibe entspricht. Die Schaltungsplatine wird gehaltert durch ihre Passung in der Vertiefung 129 und durch nicht sichtbare Rasthaken entsprechend den Rasthaken aus Figur 3.

Auf die Rückseite 130 der Schaltungsplatine ist mit Überstand eine Isolierscheibe 132 aufgeklebt.

Für die äußere Stromversorgung der Schaltung und der übrigen Teile des Antriebsmotors ist eine Stromzuleitung 133 vorgesehen, die von der Schaltungsplatine ausgeht und in einer vorbereiteten Rinne einer Speiche verlegt ist und an einem Stromanschlußkontakt endet.

Zum Anschluß der Stromzuleitung 133 an die Schaltungsplatine und zur Stromversorgung der Statorspulen und zur Ansteuerung dieser Spulen dienen an der Schaltungsplatine vorgesehene Kontakte und an der Flanschscheibe 104 angeordnete Gegenkontakte, die sich bei eingesetzter Schaltungsplatine gegenüberstehen und als Löt- oder Schweißkontakte ausgebildet sind und bei eingesetzter Schaltungsplatine durch Löten oder Schweisen miteinander verbunden werden. Von den Gegenkontakten führen Leitungen an die Statorspulen.

Der in Figur 5 dargestellt Ventilator kann bis auf die Schaltungsplatine fix und fertig zusammengebaut werden. Ist das geschehen, dann kann, zum Beispiel an einem weit entfernten Einsatzort, die Schaltungsplatine mit der Schaltung nachträglich eingesetzt werden. Dazu muß nichts ausgebaut werden, der im übrigen vorgefertigte Ventilator kann so belassen werden wie er ist.

Ist dis Schaltungsplatine eingesetzt, dann wird sie durch Rastelemente festgehalten. Es müssen jetzt noch die Kontakte mit den zugehörigen Gegenkontakten verbunden werden und dann kann man die Isolierscheibe 132 aufkelben und der Ventilator ist fix und fertig funktionsbereit.

Vorteilhaft bei der Erfindung ist auch, daß durch die leichte Zugänglichkeit der Schaltungsplatine diese nachträglich ausgetauscht werden kann für den Fall einer unbrauchbaren Steuerschaltung oder für den Fall, daß man den Motor mit einer anderen Steuerschaltung ansteuern will.

Bei der Herstellung empfiehlt sich folgendes Verfahren. Zunächst wird ein Motoreinrohling hergestellt, der bis auf die eingesetzte und angeschlossene Schaltungsplatine ein funktionsfähiger Elektromotor ist. Dann wird dieser Motorenrohling an eine Prüfschaltung angeschlossen, die der Steuerschaltung einer zugeordneten Schaltungsplatine entspricht, und geprüft. Nun kann der Motorenrohling ausgeliefert werden an einen Kunden, der dann eine zugeordnete Schaltungsplatine einsetzt, anschließt und gegebenenfalls durch eine Isolierplatte abdeckt.

**Patentansprüche**

1. Gleichstrommotor für einen Ventilator, ausgestaltet als permanentmagnetischer Außenläufermotor (1)

mit im wesentlichen zylindrischem Luftspalt für den Antriebsrotor (11),

mit einer Flanschscheibe (2), die senkrecht zur Motorachse (3) angeordnet ist und an deren Innenseite der Stator (5) befestigt ist, und

mit einer Steuerschaltung (18, 19, 20, 21) für den Motor (1), für die eine Schaltungsplatine (15) vorgesehen ist, die planparallel zur Flanschscheibe (2) angeordnet ist, dadurch gekennzeichnet,

daß die Schaltungsplatine (15, 120) an der dem Stator (5, 110) abgekehrten Außenseite der Flanschscheibe (2, 104) dadurch angeordnet ist, daß an der Außenseite der Flanschscheibe eine Vertiefung (16, 129) vorgesehen ist, in die die Schaltungsplatine paßt.

2. Gleichstrommotor nach Anspruch 1, dadurch gekennzeichnet, daß an der Außenseite der Flanschscheibe (47, 104) Rastelemente (53, 54) vorgesehen sind, die mit entsprechenden Rastgegenelementen (51) der Schaltungsplatine (40) bei eingesetzter Schaltungsplatine zusammenwirken und jeweils eine federbelastete, die Schaltungsplatine halternde Rast bilden.

3. Gleichstrommotor nach einem der vorhergehenden Ansprüche, dadurch gekennzeichnet,

daß der Stator (64) elektrisch an stationär angeordnete Kontakte (60, 61) angeschlossen ist und

daß diesen Kontakten Gegenkontakte (65, 66) an der Schaltungsplatine (63) zugeordnet sind, die bei eingesetzter Schaltungsplatine mit der Kontakten in elektrische Verbindung geraten.

4. Gleichstrommotor nach einem der vorhergehenden Ansprüche, dadurch gekennzeichnet, daß die Schaltungsplatine (15, 120) an ihrer der Flanschscheibe (2, 104) abgekehrten Rückseite durch eine Isolierscheibe (26, 132) abgedeckt ist.

5. Gleichstrommotor nach Anspruch 3 oder 4, dadurch gekennzeichnet, daß die Kontakte (60, 61) an der der Flanschinnenseite zugewandten Seite des Stators fest angeordnet sind und die Gegenkontakte (65, 66) auf der Schaltungsplatine montiert sind und die Kontakte (60, 61) und Gegenkontakte (65, 66) zusammen einen Steckkontakt bilden.

6. Gleichstrommotor nach einem der vorhergehenden Ansprüche, dadurch gekennzeichnet, daß für auftragende, auf der der Flanschscheibe (2, 47, 104) zugekehrten Vorderseite der Schaltungsplatine (15, 40, 120) angeordnete Schaltungselemente (19, 21, 43, 121) Ausnehmungen (50) und/oder Durchbrüche (22, 23, 126) in der Flanschscheibe vorgesehen sind.

7. Gleichstrommotor nach einem der vorhergehenden Ansprüche, dadurch gekennzeichnet,

daß die Steuerschaltung mit einem die Drehstellung des Rotors (11) erkennenden Sensorelement (21) ausgestattet ist,

daß dieses Sensorelement an der Vorderseite der Schaltungsplatine (15) angeordnet ist und bei eingesetzter Schaltungsplatine durch einen zugeordneten, in der Flanschscheibe (2) vorgesehenen Durchbruch (22) bis an den Rotor ragt und

daß die Schaltungsplatine nur in einer einzigen Stellung gegenüber der Flanshscheibe in diese einsetzbar ist.

8. Gleichstrommotor nach Anspruch 7, dadurch gekennzeichnet, daß das magnetfeldempfindliche Sensorelement (21) bei eingesetzter Schaltungsplatine (15) unter Aussparung eines Luftspaltes (27) bis dicht an Rotorpole ragt.

9. Gleichstrommotor nach Anspruch 7 oder 8, dadurch gekennzeichnet, daß das Sensorelement (21) einen Hallgenerator aufweist.

10. Gleichstrommotor nach einem der vorhergehenden Ansprüche, dadurch gekennzeichnet, daß für die äußere Stromversorgung der Steuerschaltung und der übrigen Teile des Motors vorgesehene Stromleitungen (30, 31) von der Schaltungsplatine (15) ausgehen.

11. Gleichstrommotor nach einem der vorhergehenden Ansprüche, dadurch gekennzeichnet, daß die Schaltungsplatine (15, 120) in den im übrigen fertig montierten Motor einsetzbar ist, derart, daß der Motor bei eingesetzter und angeschlossener Schaltungsplatine funktionsfähig ist.

12. Gleichstrommotor nach einem der vorhergehenden Ansprüche, dadurch gekennzeichnet, daß der Ventilator ausgestattet ist mit einem Rohrstück (103), das einen Strömungskanal umgibt und innerhalb dessen der Motor (109) koaxial gelagert ist, mit Speichen (105) zur Befestigung der Flanschscheibe (104) am Rohrstück, die sich mit der Flanschscheibe am einen Ende des Rohrstückes erstrecken, und mit einem Kranz von Flügeln (115, 116), die außem am Rotor (111) befestigt sind und sich innerhalb des Rohrstückes im ringförmig ausgesparten Strömungskanal erstrecken.

13. Gleichstrommotor nach einem der Ansprüche 6 bis 12, dadurch gekennzeichnet, daß alle auftragenden Schaltungselemente (41, 42, 43, 44) nur auf der Vorderseite der Schaltungsplatine angeordnet sind und vorzugsweise eine selbstklebend ausgebildete Isolierscheibe (132) auf der Rückseite vorgesehen ist.

14. Verfahren zur Herstellung eines Gleichstrommotors (1) nach einem der vorhergehenden Ansprüche, dadurch gekennzeichnet,

daß ein Motorvorprodukt, das bis auf die eingesetzte und angeschlossene Schaltungsplatine (15) ein funktionsfähiger Gleichstrommotor ist, hergestellt wird,

daß das Motorvorprodukt dann an eine Prüfschaltung angeschlossen wird, die der Steuerschaltung (18, 19, 20, 21) einer zugeordneten Schaltungsplatine (15) entspricht, und geprüft wird und

daß dann eine zugeordnete Schaltungsplatine (15) eingesetzt, angeschlossen und gegebenenfalls durch eine Isolierplatte (26) abgedeckt wird.

## Revendications

1. Moteur à courant continu pour un ventilateur, réalisé sous la forme d'un moteur à induit extérieur (1) à aimantation permanente,

comprenant un entrefer pour l'essentiel cylindrique pour le rotor d'entraînement (11),

comprenant une joue (2) qui est disposée perpendiculairement à l'axe (3) du moteur et qui est fixée sur le côté intérieur de son stator (5), et

comprenant un circuit de commande (18, 19, 20, 21) pour le moteur (1), pour lequel est prévue une plaquette de circuit imprimé (15) qui est disposée avec son plan parallèle à celui de la joue (2), caractérisé par le fait

que la plaquette de circuit imprimé (15, 120) est disposée sur le côté extérieur de la joue (2, 104) opposé au stator (5, 110) grâce au fait qu'il est prévu sur le côté extérieur de la joue un enfoncement (16, 129) dans lequel s'ajuste la plaquette de circuit imprimé.

2. Moteur à courant continue selon la revendication 1, caractérisé par le fait qu'il est prévu sur le côté extérieur de la joue (47, 104) des éléments d'encliquetage (53, 54) qui coopèrent avec des contre-éléments d'encliquetage correspondants (51) de la plaquette de circuit imprimé (40) lorsque la plaquette de circuit imprimé est insérée et constituent à chaque fois un encliquetage élastique maintenant la plaquette de circuit imprimé.

3. Moteur à courant continu selon l'une des revendications précédentes, caractérisé par le fait

que le stator (64) est relié électriquement à des contacts (60, 61) disposés de manière fixe, et

qu'à ces contacts sont associés sur la plaquette de circuit imprimé (63) des contre-contacts (65, 66) qui viennent en liaison électrique avec les contacts lorsque la plaquette de circuit imprimé est insérée.

4. Moteur à courant continu selon l'une des revendications précédentes, caractérisé par le fait que la plaquette de circuit imprimé (15, 120) est recouverte par une plaquette isolante (26, 132) sur son côté postérieur opposé à la joue (2, 104).

5. Moteur à courant continu selon la revendication 3 ou 4, caractérisé par le fait que les contacts (60, 61) sont disposés fixes sur le côté du stator tourné vers le côté intérieur de la joue et les contre-contacts (65, 66) sont montés sur la plaquette de circuit imprimé et les contacts (60, 61) et les contre-contacts (65, 66) constituent ensemble un contact à fiches.

6. Moteur à courant continu selon l'une des revendications précédentes, caractérisé par le fait que, pour des éléments de circuits rapportés (19, 21, 43, 121) disposés sur le côté antérieur de la plaquette de circuit imprimé (15, 40, 120) tourné vers la joue (2, 47, 104), il est prévu des évidements (50) et/ou des passages (22, 23, 126) dans la joue.

7. Moteur à courant continu selon l'une des revendications précédentes, caractérisé par le fait

que le circuit de commande est équipé d'un élément capteur (21) reconnaissant la position en rotation du rotor (11),

que cet élément capteur est disposé sur le côté antérieur de la plaquette de circuit imprimé (15) et fait saillie jusqu'au rotor, lorsque la plaquette de circuit imprimé est insérée, à travers un passage (22) associé prévu dans la joue (2), et

que c'est seulement dans une seule position par rapport à la joue que la plaquette de circuit imprimé peut être insérée dans celle-ci.

8. Moteur à courant continu selon la revendication 7, caractérisé par le fait

que l'élément capteur sensible au champ magnétique (21) fait saillie, lorsque la plaquette de circuit imprimé (15) est insérée, jusque près du pôle du rotor en ménageant un entrefer (27).

9. Moteur à courant continu selon la revendication 7 ou 8, caractérisé par le fait que l'élément capteur (21) comporte un générateur Hall.

10. Moteur à courant continu selon l'une des revendications précédentes, caractérisé par le fait que des conducteurs de courant (30, 31) prévus pour l'alimentation extérieure en courant du circuit de commande et des autres parties du moteur partent de la plaquette de circuit imprimé (15).

11. Moteur à courant continu selon l'une des revendications précédentes, caractérisé par le fait la plaquette de circuit imprimé (15, 120) peut être insérée dans le moteur dont le montage est terminé pour le reste, de telle sorte que le moteur soit apte à fonctionner lorsque la plaquette de circuit imprimé est insérée et connectée.

12. Moteur à courant continu selon l'une des revendications précédentes, caractérisé par le fait que le ventilateur est équipé d'une pièce tubulaire (103) qui entoure un canal d'écoulement et à l'intérieur de laquelle le moteur (109) est monté tournant de manière coaxiale, de rayons (105) pour fixer la joue (104) à la pièce tubulaire, lesquels s'étendent avec la joue à une extrémité de la pièce tubulaire, et d'une couronne de pales (115, 116) qui sont fixées extérieurement sur le rotor (111) et s'étendent à l'intérieur de la pièce tubulaire dans le canal d'écoulement évidé en forme d'anneau.

13. Moteur à courant continu selon l'une des revendications 6 à 12, caractérisé par le fait

que tous les éléments de circuits rapportés (41, 42, 43, 44) sont disposés seulement sur le côté antérieur de la plaquette de circuit imprimé et qu'il est prévu de préférence sur le côté postérieur une plaquette isolante (132) réalisée de manière autocollante.

14. Procédé pour la fabrication d'un moteur à courant continu (1) selon l'une des revendications précédentes, caractérisé par le fait

que l'on fabrique une ébauche de moteur qui est un moteur à courant continu susceptible de fonctionner, à l'exception de la plaquette de circuit imprimé (15) insérée et reliée,

que l'on connecte alors l'ébauche de moteur à un circuit d'essai qui correspond au circuit de commande (18, 19, 20, 21) d'une plaquette de circuit imprimé associée (15), et qu'on l'essaie, et

que l'on introduit alors une plaquette de circuit imprimé associée (15), on la connecte et on la recouvre le cas échéant d'une plaque isolante (26).

**Claims**

1. Direct current motor for a fan in the form of a permanent magnetic external rotor-type motor (1), with a substantially cylindrical air gap for the drive rotor (11), with a flange plate (2), which is arranged perpendicularly with respect to the motor shaft (3) and to whose inside is fixed the stator (5) and with a control circuit (18, 19, 20, 21) for the motor (1), which is provided with a circuit board (15), which is positioned in plane parallel manner to the flange plate (2), characterized in that the circuit board (15, 120) is positioned on the outside of the flange plate (2, 104) remote from the stator (5, 110), in that a depression (16, 129) is provided on the outside of the flange plate and into it fits the circuit board.

2. Direct current motor according to claim 1, characterized in that on the outside of the flange plate (47, 104) locking elements (53, 54) are provided, which cooperate with corresponding opposite locking elements (51) of the circuit board (40) when the latter is inserted and in each case form a spring-loaded locking device retaining the circuit board.

3. Direct current motor according to one of the preceding claims, characterized in that the stator (64) is electrically connected to stationary contacts (60, 61) and that with the latter are associated cooperating contacts (65, 66) on the circuit board (63) which, when the latter is inserted, come into electrical connection with the said contacts.

4. Direct current motor according to one of the preceding claims, characterized in that the back of the circuit board (15, 120) remote from the flange plate (2, 104) is covered by an insulating plate (26, 132).

5. Direct current motor according to claims 3 or 4, characterized in that the contacts (60, 61) are fixed on the side of the stator facing the flange inside and the cooperating contacts (65, 66) are fitted to the circuit board and the contact (60, 61) and cooperating contacts (65, 66) together form a plug contact.

6. Direct current motor according to one of the preceding claims, characterized in that recesses (50) and/or openings (22, 23, 126) are provided in the flange plate for bearing circuit elements (19, 21, 43, 121) located on the front of the circuit board (15, 40, 120) facing the flange plate (2, 47, 104).

7. Direct current motor according to one of the preceding claims, characterized in that the control circuit is equipped with a sensor element (21) detecting the rotation position of the rotor (11), that said sensor element is positioned on the front of the circuit board (15) and, when the latter is inserted, projects through an associated opening (22) in flange plate (2) up to the rotor and that the circuit board can only be inserted if the flange plate in a single position with respect thereto.

8. Direct current motor according to claim 7, characterized in that the magnetic field-sensitive sensor element (21), accompanied by the formation of an air gap (27), extends close to the rotor poles when the circuit board (15) is inserted.

9. Direct current motor according to claims 7 or 8, characterized in that the sensor element (21) has a Hall generator.

10. Direct current motor according to one of the preceding claims, characterized in that current lines (30, 31) emanate from the circuit board (15) for the external power supply of the control circuit and the remaining parts of the motor.

11. Direct current motor according to one of the preceding claims, characterized in that the circuit board (15, 120) is insertable in the otherwise completely fitted motor in such a way that the motor is operable when the circuit board is inserted and connected.

12. Direct current motor according to one of the preceding claims, characterized in that the fan is equipped with a pipe length (103), which surrounds a flow duct and within which the motor (109) is coaxially mounted, has spokes (105) for fixing the flange plate (104) to the pipe length and which extend with the flange plate at one end of the pipe length and with a ring of blades (115, 116), which are externally fixed to the rotor (111) and extend within the pipe length in an annularly recessed flow duct.

13. Direct current motor according to one of the claims 6 to 12, characterized in that all the bearing circuit elements (41, 42, 43, 44) are only arranged on the front of the circuit board and preferably a self-adhesive insulating plate (132) is provided on the back.

14. Method for producing a direct current motor (1) according to one of the preceding claims, characterized in that the motor intermediate product and which, except for the inserted and connected circuit board (15), is an operable d.c. motor, that the motor intermediate product is then connected to a test circuit corresponding to the control circuit (18, 19, 20, 21) of an associated circuit board (15) and is tested and that then an associated circuit board (15) is inserted, connected and optionally covered by an insulating plate (26).

Fig.1

Fig.3

Fig.4

Fig.2

Fig.5